Europäisches Patentamt

European Patent Office

Office européen des brevets

(11) Publication number: **0 103 953**
**B1**

(12) **EUROPEAN PATENT SPECIFICATION**

(45) Date of publication of patent specification: **10.12.86**

(51) Int. Cl.⁴: **B 01 D 13/00**

(21) Application number: **83304215.3**

(22) Date of filing: **20.07.83**

(54) Separatory module comprising hollow fibre membranes.

(30) Priority: **23.08.82 US 410527**

(43) Date of publication of application:
**28.03.84 Bulletin 84/13**

(45) Publication of the grant of the patent:
**10.12.86 Bulletin 86/50**

(84) Designated Contracting States:
**AT BE CH DE FR GB IT LI LU NL**

(56) References cited:
**DE-A-2 650 588**
**DE-B-1 236 476**
**GB-A-2 011 274**
**US-A-3 442 389**
**US-A-3 505 686**

(73) Proprietor: **ALBANY INTERNATIONAL CORP.**
**1 Sage Road**
**Menards New York 12201 (US)**

(72) Inventor: **Coplan, Myron J.**
**47 Speen Street**
**Natick Massachusetts 01760 (US)**
Inventor: **Bilewski, Friedhelm**
**13 Oak Street**
**Medway Massachusetts 02090 (US)**
Inventor: **Sebring, Robert**
**17 Orchard Circle**
**Westwood Massachusetts 02090 (US)**
Inventor: **Schiffer, Daniel**
**455 Hawthorne Street**
**Neenah Wisconsin 54956 (US)**

(74) Representative: **Jennings, Roy Alfred et al**
**GILL JENNINGS & EVERY 53-64 Chancery Lane**
**London WC2A 1HN (GB)**

EP 0 103 953 B1

Courier Press, Leamington Spa, England.

## Description

The use of membranes to effect separation of gas/gas, liquid/liquid, and liquid/solid mixtures and solutions has achieved general industrial applicability for various purposes, among which are ultrafiltration, hyperfiltration, reverse osmosis and dialysis. In general, membrane elements used in these separatory techniques are contained in vessels, comprising a container having various inlet and outlet ports. An assembly of membranes is provided within the container and the entire assembly is usually referred to as a separatory module. The internal arrangements of the module are such as to permit the introduction of a feed stream with or without pressure on the upstream faces of the membranes and include means for collecting permeate which passes through the membranes and emerges on their downstream faces, and means for keeping the feed and the permeate from commingling.

Membranes have been fabricated in various shapes, such as:— (1) flat sheets which may typically be supported in a plate and frame structure similar to a filter press; (2) flat sheets rolled into spirals with spacing materials interleaved with the membrane and the assembly being sealed to provide spiroidal channels permitting the passage of a feed on one side of the coiled membrane through the membrane to the opposite side of the membrane; (3) tubes lining the inner surface of a reinforced braid, the braid itself at times being a component in a larger tube; and (4) open-ended hollow fibres so arranged and sealed into header plates as to provide a separation of the flow over the external surfaces of the hollow fibres from flows within the bores of the hollow fibres resulting from the passage of permeate through the walls of the hollow fibres, which form the membranes.

The present invention is specifically concerned with separatory modules comprising hollow fibres assembled in the form of bundles to provide the desired separation.

In EP—A—0 009 374, (European Patent Application 79301 855.4), various techniques for the selection of the length of and winding of hollow fibres and the fabrication and assembly of such fibres into separatory modules are described. It is noted however that for the practical usage of such modules in commercial application, small bundles in single bundle housings are too small. On the other hand as taught in the above noted specification other limitations exist which restrict the size of individual bundles.

GB—A—2 011 274 and DE—A—2 650 588 disclose hollow separating modules which include a plurality of bundles of hollow fibre membranes each of which is potted at one end and which are enclosed in a cylindrical impervious pressure shell, there being a cluster of the bundles within the shell having their axes parallel to but displaced from the shell axis, there being further provided fluid feed means for admission of pressurized feed, means for distributing feed fluid uniformly to said bundles, means for collecting and removing permeate passing through said fibre membranes, and means for collecting and removing concentrated non-permeated feed fluid.

The object of the present invention is to provide a separatory module which includes these features, but is of improved construction.

According to this invention, such a separatory module is characterised by a base member provided with openings receiving the potted ends of said bundles, and a back-up disc which, in operation, withstands internal hydraulic thrust on the potted ends of the bundles.

In one example, there are six bundles in a single housing, however the invention is not limited to this number and the module can be adapted to accommodate varying numbers of bundles. The module is constructed to have feed material flowing into the shell over the six bundles and the feed can be from a single end or from both ends of the cylindrical shell. The permeates and concentrates may be collected from each bundle separately or from any group of bundles and from either end of the shell.

Provision can be made for feeding the feed material radially inwards toward the centre of each bundle or radially outwards from the centre towards the perimeter of each bundle, or parallel to the longitudinal axis of each bundle.

A further and significant advantage of the present invention is that it allows for more of the bundles or fibres to be easily replaced on a selective basis.

Some examples of separatory modules in accordance with the invention are illustrated in the accompanying drawings in which:—

Figure 1A is a perspective view of a first example as seen from the front;

Figure 1B is a perspective view of the first example but as seen from the rear;

Figure 2 is a longitudinal sectional view of the first example along the line 2—2 in Figure 1A;

Figure 3 is a front view of the first example as seen in the direction of the arrows on the line 3—3 in Figure 2;

Figure 4 is a cross-sectional view of the first example as seen in the direction of the arrows on the line 4—4 in Figure 2;

Figure 5A is an exploded perspective view of part of the first example illustrating the manner of assembly;

Figure 5B is a sectional view on a plane indicated by the arrows on the line 5B—5B in Figure 5A;

Figures 6 and 7 are partial longitudinal sectional views of second and third examples; and

Figures 8 and 9 show details of the internal construction of one example, Figure 9 being a section on the line 9—9 in Figure 8.

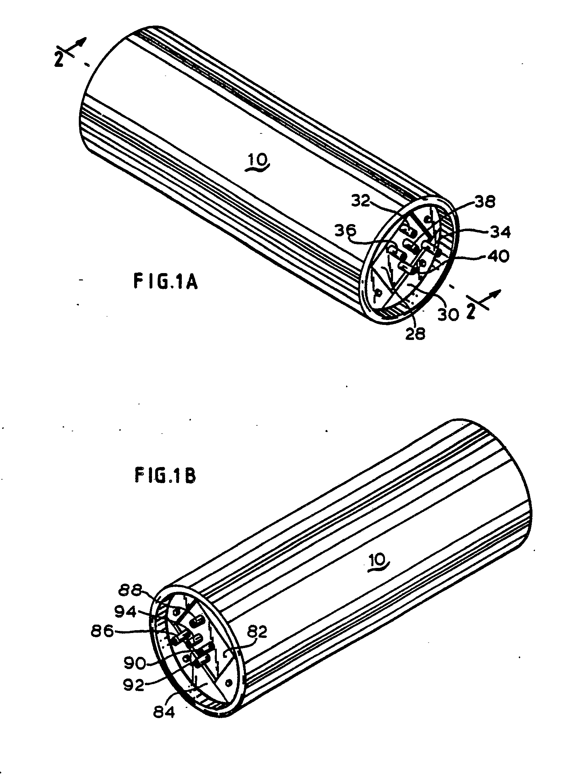

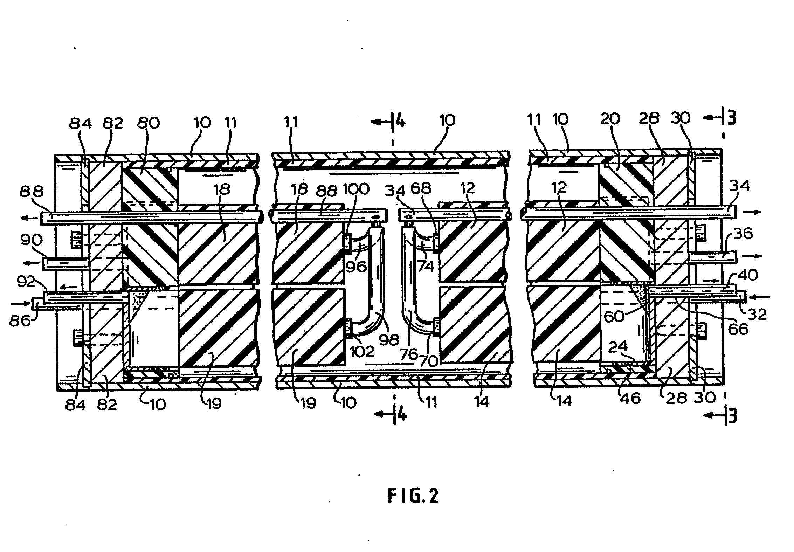

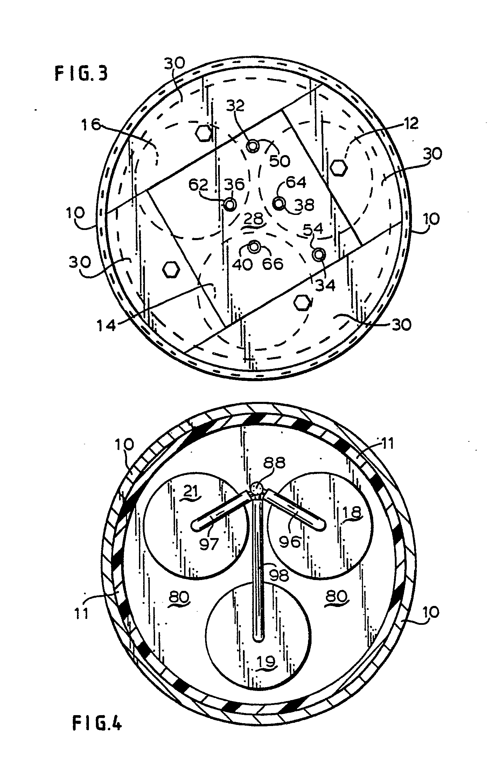

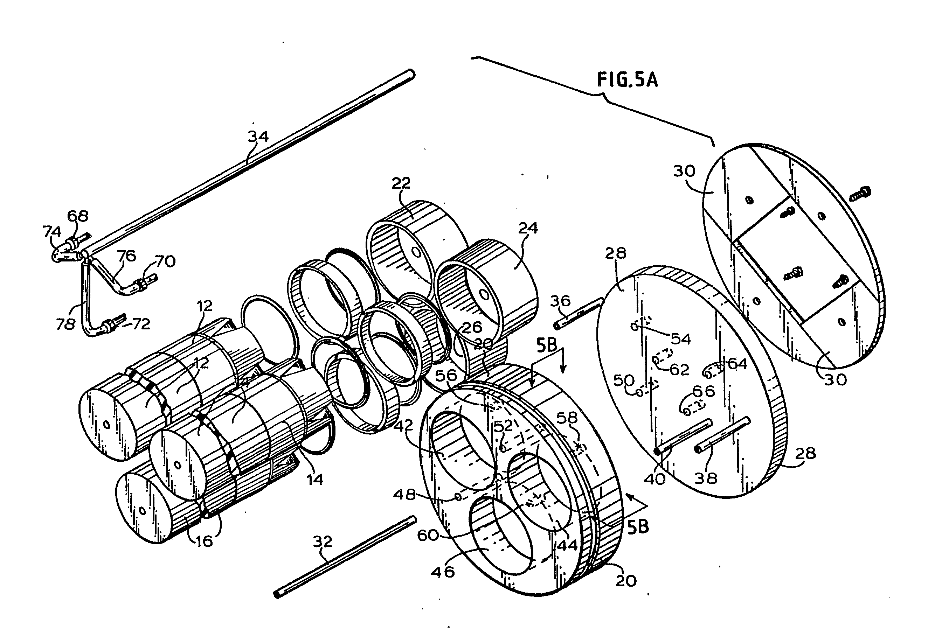

As seen in Figures 1—5B, the first example includes an outer cylindrical pressure shell 10, which may be of mild steel or of filament wound plastics material, with an inert impervious inner liner 11 which may be for example of PVC, PTFE or polysulphone, and six hollow fibre bundles which may be fabricated as described in the teachings of the European Patent Application referred to above. In Figure 2 only four bundles 12, 14, 18, and 19 are visible. In the views shown in Figures 3 and 4, three bundles are indicated on each end. The six bundles are arranged in two clusters each containing three bundles and with one cluster at each end of the shell 10.

As seen in Figure 2 and in the exploded perspective view of Figure 5A the front cluster in addition to the bundles 12, 14 and 16 includes a monolithic inert base 20, typically of vinyl polymer, having three cylindrical openings 42, 44 and 46 in which respective bundles 12, 14 and 16 with respective potted ends 22, 24, and 26 are inserted, backed by a reinforcing back-up disc 28, which may be of stainless steel or fibre-reinforced plastics material, bolted thereto and a segmented retainer 30. A single feed tube 32 is provided for each cluster as is a single concentrate outlet tube 34. There are three tubes 36, 38 and 40, one for the removal of permeate from each bundle.

In Figure 5A the openings for receiving the bundles 12, 14 and 16 are respectively indicated by the numerals 42, 44 and 46. Openings for the passage of the feed tube 32 through the base 20 and the disc 28 are respectively numbered 48 and 50. Openings for passage of the concentrate tube 34 through the base 20 and the disc 28 are respectively numbered 52 and 54. Additionally openings for the passage of the permeate tubes 36, 38 and 40 through the base 20 are labeled 56, 58 and 60 respectively and for passage through the disc 28 are labelled 62, 64 and 66 respectively.

The arrangement is such that the feed port at the opening 50 is open to the chamber within which the bundles 12, 14 and 16 are disposed so that the feed can flow over the outer surfaces of the fibres in all the bundles. Each of the bundles is provided with a rigid centre tube such as tubes 68, 70 and 72 which are respectively connected to the concentrate tube 34 by flexible tubing 74, 76 and 78. The permeate is received from the bores of the hollow fibres in galleries formed in the potting compound at the end of each bundle in a suitable manner such as that described in EP—A—0 009 374.

A similar arrangement is provided at the rear end of the shell 10 where there are a base 80, a back-up disc 82, a segmented retainer 84, a feed tube 86, a concentrate tube 88, and permeate tubes 90, 92 and 94.

The module is assembled by steps which include first assembling the outer shell and liner separately and inserting the individual bundles in the openings of each of the bases. Each base is backed by the back-up disc and the two parts are bolted together and the segmented retainer is applied. The two sub-assemblies are then assembled in the shell and liner.

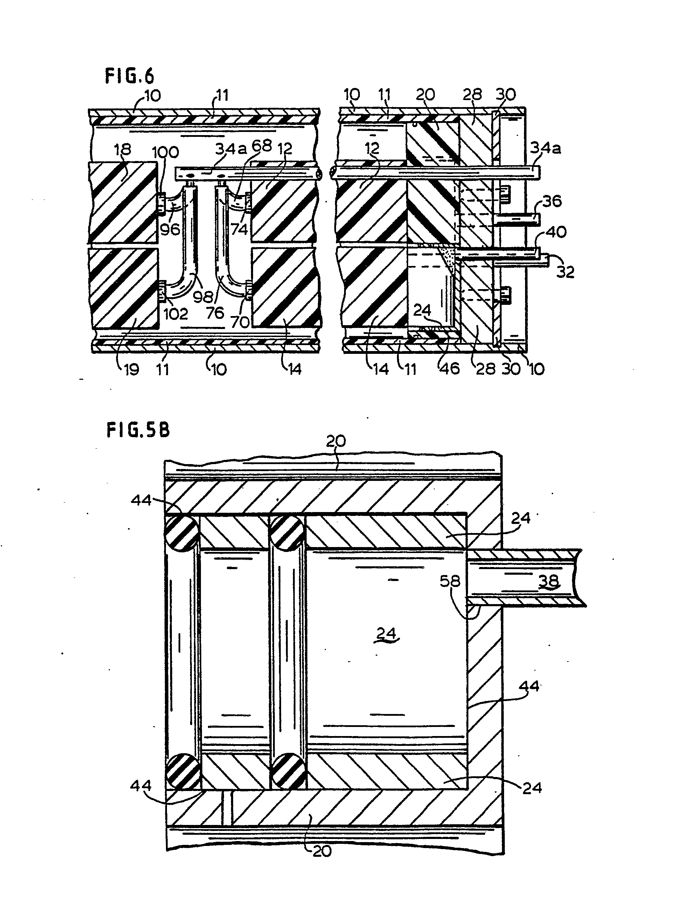

Variations of flow paths can be accomplished with the module. For example, the feed can be from one end only rather than from both ends by merely plugging the feed tube at one end. The recovery of concentrate can be from one end only rather than both ends as shown in Figure 6 wherein the concentrate tube has been modified as is indicated by the numeral 34a and flexible tubes 96 and 98 are shown connected to rigid tubes 100 and 102 in bundles 18 and 19 and to the tube 34a.

Both of the examples described above embody the radially inward flow of feed with centre concentrate extraction, the concentrate tube within each bundle being provided with perforations. This can be reversed so as to have radially outward feed flow. Inside the bundles the tubes have equal pressure on the inside and the outside surfaces and therefore do not require radial strength in the tubing.

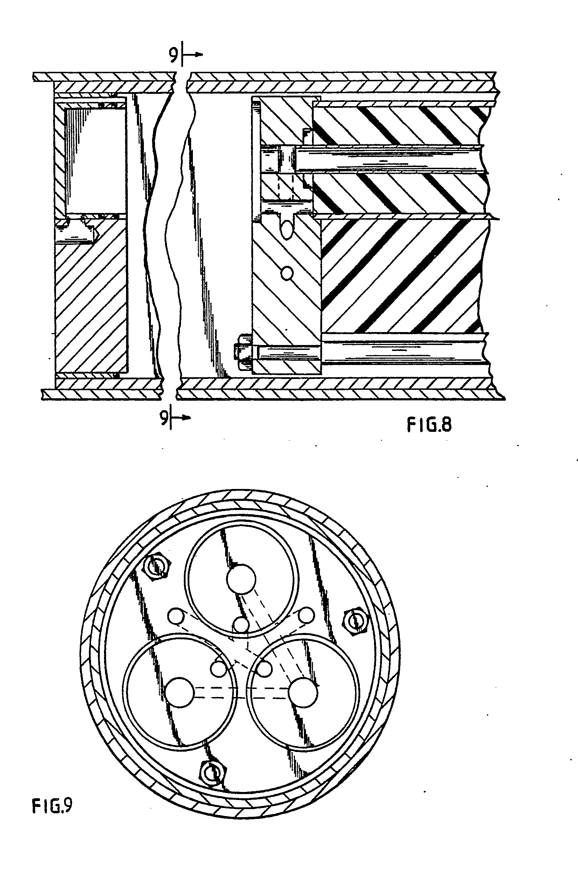

Additionally, the flow pattern if desired can be parallel to the axis of the bundle if an impervious confining outer sleeve is provided around each bundle and the feed is introduced at the unpotted end of each bundle. Thus three will be longitudinal axial flow over the outer surfaces of the individual fibres of the bundles thereby creating higher velocities over the fibres to minimize concentration polarization effects. An end closure member with ports for introducing the feed in this way into the bundles is shown in Figures 8 and 9.

Various materials can be substituted and various components can be modified. For example, the outer shell may be of mild steel, of other metals, or of reinforced plastics material. In some circumstances the inert inner liner may be omitted. Additionally the inside surface of the outer shell when of metal can be epoxy coated and the liner can then be omitted. The support disc 28 may also be of fibre-reinforced plastics material for example.

In the examples disclosed the permeates are collected near the potted ends of the fibre bundles separately as described in EP—A—0 009 374. This can be varied however, for example the openings in the monolithic base 20 can be fitted with O-rings held in by retaining rings or in grooves which will provide a collection gallery. Such a construction further lends itself to the provision of a single collection gallery such as a plate of plastics material with a reinforcing backing, to take the end thrust on the bundles, and with all three bundles at one end of the shell connecting therewith. The choices in the potted termination of the bundle collection gallery for permeate are many and may embody alternative cutting geometries, pot configurations and relief of the plastics base member to provide a collection gallery.

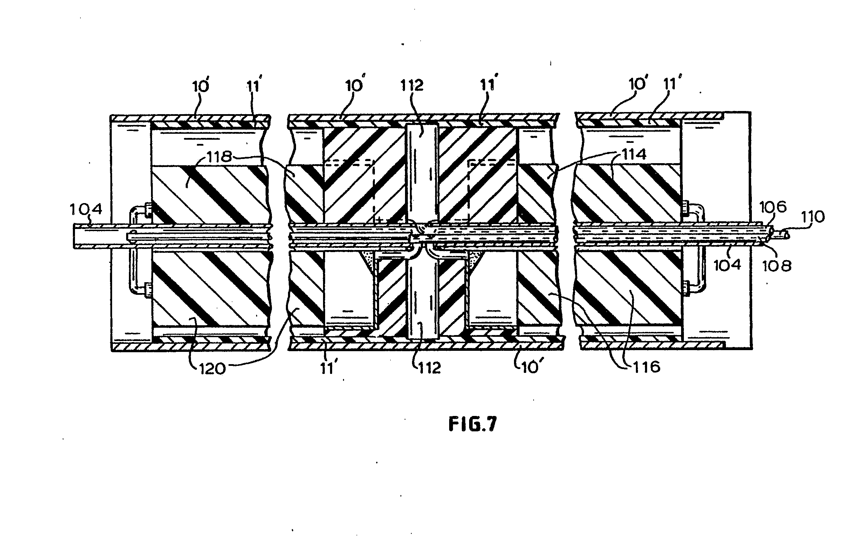

A further example is shown in Figure 7 where parts similar to those of the previously described example have the identification numerals given previously with "primes" following. In the embodiment of Figure 7, rather than utilizing retainer members, a pipe 104 is disposed along the longitudinal axis of the shell 10'. The pipe 104 is formed as a structural member and can also be utilized for feed or for the extraction of concentrate. In the example of Figure 7 however, three pipes 106, 108, and 110 are provided within the pipe 104, with a pipe 106 providing the feed and pipes 108 and 110 respectively providing the outlets for permeate and concentrate.

With the central load bearing pipe 104 many advantages follow. For example, a glass fibre reinforced plastic casing may be used more readily as there is no need for the casing to support the end plates which take the thrust.

The utilization of the central support pipe 104 can allow for a unit in which a single central permeate collection chamber 112 receives permeate from centrally located facing potted zones, four of which are shown and indicated by the numerals 114, 116, 118 and 120. Although these are not shown in Figure 7, this example includes back-up discs similar to the discs 28 of the first example at the ends of the potted zones 114, 116, 118 and 120 for transmitting hydraulic pressure within the shell 10' to the pipe 104, which is then in tension.

## Claims

1. A separatory module including a plurality of bundles (12, 14, 16) of hollow fibre membranes each of which is potted at one end and which are enclosed in a cylindrical impervious pressure shell (10, 11), there being a cluster (12, 14, 16) of the bundles within the shell (10, 11) having their axes parallel to but displaced from the shell axis, fluid feed means (32, 48, 50) for admission of pressurized feed, means for distributing feed fluid uniformly to said bundles, means (36, 38, 40) for collecting and removing permeate passing through said fibre membranes, and means (34, 74, 76, 78) for collecting and removing concentrated non-permeated feed fluid, characterised by a base member (20) provided with openings (42, 44, 46) receiving the potted ends of said bundles, and a back-up disc (28) which, in operation, withstands internal hydraulic thrust on the potted ends of the bundles.

2. A separatory module according to Claim 1, in which there are two clusters of bundles (12, 14, 16 and 18, 19) and their respective base members (20, 80), back-up discs (28, 82), and feed (32, 86), permeate (36, 38, 40 and 90, 92, 94) and concentrate (34, 88) collection means are disposed in axial relationship to one another with their respective back-up discs (28, 82) located at opposite ends of the pressure shell (10, 11).

3. A separatory module according to Claim 1 or Claim 2, wherein the fluid feed means (32, 86) directs the flow of feed within each bundle parallel to its axis.

4. A separatory module according to any one of Claims 1 to 3, wherein the concentrate fluid collection means for each bundle comprises a tube (68, 70, 72, 100, 102) lying along the central axis of the bundle.

5. A separatory module according to Claim 1 or Claim 2, wherein the fluid feed means directs the flow of feed within each bundle radially inwards toward its central axis.

## Patentansprüche

1. Trennmodul einschließlich einer Vielzahl von Bündeln (12, 14, 16) von Hohlfasermembranen, von denen jede an einem Ende pottiert ist und die von einem zylindrischen undurchlässigen Druckgehäuse (10, 11) umgeben sind, wobei eine Zusammenballung bzw. ein Cluster (12, 14, 16) der Bündle innerhalb des Gehäuses (10, 11) vorliegt, deren Achsen versetzt parallel zur Gehäuseachse verlaufen sowie Strömungsmittel-Zufuhrmittel (32, 48, 50) zum Einlaß unter Druck stehenden Strömungsmittels, Mittel zum einheitlichen Verteilen des Strömungsmittels zu den Bündeln, und Mittel (36, 38, 40) zum Sammeln und Entfernen des durch die Fasermembranen hindurchtretenden Permeats und Mittel (34, 74, 76, 78) zum Sammeln und Entfernen konzentrierten nichtpermeierten Strömungsmittels, gekennzeichnet durch ein Basisglied (20), das mit Öffnungen (42, 44, 46) versehen ist, die die pottierten Enden der Bündel aufnehmen und eine Sicherheits-Scheibe (28), die im Betrieb dem inneren hydraulischen Druck auf die pottierten Enden der Bündel widersteht.

2. Trennmodul nach Anspruch 1, dadurch gekennzeichnet, daß zwei Zusammenballungen bzw. Cluster von Bündeln (12, 14, 16 und 18, 19) und ihre entsprechenden Basisglieder (20, 80) Sicherheitsscheiben (28, 82), sowie Zufuhrmittel (32, 86) sowie Permeat (36, 38, 40 und 90, 92, 94) vorgesehen werden, und daß die Konzentrat-Sammelmittel (34, 88) in axialer Beziehung zueinander angeordnet sind, wobei ihre entsprechenden Sicherheitsscheiben (28, 82) an gegenüberliegenden Enden des Druckgehäuses (10, 11) angeordnet sind.

3. Trennmodul nach Anspruch 1 oder Anspruch 2, dadurch gekennzeichnet, daß das Strömungsmittel-Zufuhrmittel (32, 86) den Fluß des Strömungsmittels innerhalb jedes Bündels parallel zu seiner Achse ausrichtet.

4. Trennmodul nach irgendeinem der Ansprüche 1 bis 3, dadurch gekennzeichnet, daß das Konzentrat-Strömungssammelmittel für jedes Bündel ein Rohr (68, 70, 72, 100, 102) umfaßt, das entlang der Zentralachse des Bündels liegt bzw. ausgerichtet ist.

5. Trennmodul nach Anspruch 1 oder Anspruch 2, dadurch gekennzeichnet, daß das Strömungsmittel-Zufuhrmittel den Fluß des Strömungsmittels innerhalb jedes Bündels radial nach innen in Richtung auf seine Mittelachse richtet.

## Revendications

1. Module de séparation comprenant plusieurs faisceaux (12, 14, 16) de membranes en fibres creuses enrobés chacun à une extrémité et enfermés dans une enveloppe imperméable cylindrique (10, 11) de pression, un groupe (12, 14, 16) des faisceaux à l'intérieur de l'enveloppe (10, 11) ayant leurs axes parallèles à, mais décalés de l'axe de l'enveloppe, des moyens de charge de fluide (32, 48, 50) pour l'admission d'une charge sous pression, des moyens pour la distribution du fluide de charge uniformément vers lesdits faisceaux, des moyens (36, 38, 40) pour collecter et retirer une phase passante ayant passé à travers lesdites membranes en fibres, et des moyens (34, 74, 76, 78) pour collecter et retirer le fluide de charge concentré, n'ayant pas passé à travers les membranes, caractérisé par un élément de base (20) présentant des ouvertures (42, 44, 46) recevant les extrémités enrobées desdits faisceaux, et un disque de soutien (28) qui, en fonctionnement, supporte la poussée hydraulique interne exercée sur les extrémités enrobées des faisceaux.

2. Module de séparation selon la revendication 1, dans lequel il y a deux groupes de faisceaux (12, 14, 16 et 18, 19) et leurs éléments de base respectifs (20, 80), leurs disques respectifs de soutien (28, 82) et leur charge respective (32, 86), des moyens collecteurs de phase passante (36, 38, 40 et 90, 92, 94) et de concentré (34, 88) sont disposés axialement les un par rapport aux autres, leurs disques respectifs (28, 82) de soutien étant situés à des extrémités opposées de l'enveloppe de pression (10, 11).

3. Module de séparation selon la revendication 1 ou la revendication 2, dans lequel les moyens (32, 86) de charge de fluide dirigent l'écoulement de charge à l'intérieur de chaque faisceau, parallèlement à son axe.

4. Module de séparation selon l'une quelconque des revendications 1 à 3, dans lequel les moyens collecteurs de fluide concentré, pour chaque faisceau, comprennent un tube (68, 70, 72, 100, 102) s'étendant le long de l'axe central du faisceau.

5. Module de séparation selon la revendication 1 ou la revendication 2, dans lequel les moyens de charge de fluide dirigent l'écoulement de charge à l'intérieur de chaque faisceau, radialement vers l'intérieur en direction de son axe central.

FIG.1A

10

32    38

36    34

40

30   2

28

FIG.1B

10

88
94
86
90
92
84

82

FIG.2

FIG.3

FIG.4

3

FIG.5A

FIG.6

FIG.5B

FIG.7

0 103 953

FIG.8

FIG.9

7